# EUROPEAN PATENT APPLICATION

(11) **EP 4 737 109 A1**
(43) Date of publication of application: **06.05.2026**
(21) Application number: 25209490.9
(22) Date of filing: 17.10.2025
(51) Int. Cl.: B30B 15/30, H01M 4/04, B65G 47/20

(54) **POWDER DISPENSING SYSTEM AND METHOD OF POWDER DISTRIBUTION**

(30) Priority: 31.10.2024 US 202418933553
(71) Applicant: Tesla, Inc., Austin, TX 78725 (US)
(72) Inventor: Laxman Nevase, Shamali, Austin 78725 (US); Grindstaff, Marlena, Austin 78725 (US); Pawar, Nikhil Hemant, Austin 78725 (US); Tsouridis, Sotirios Demetrio, Austin 78725 (US); Matthews, Kevin Cornelius, Austin 78725 (US); Kodam, Madhusudhan, Austin 78725 (US)
(74) Representative: Zacco Sweden AB

(57) **Abstract**

Generally described, one or more aspects of the present disclosure relate to methods, systems, and devices related to a powder dispensing system, including a pair of calender rolls, a first conical hopper and a second conical hopper positioned above the pair of calender rolls, each hopper having a first temperature controlled fluidized section, a first flow control system in fluidic connection with the first temperature controlled fluidized section, and a second flow control system in fluidic connection with the second temperature controlled fluidized section, a vertical linear actuator configured to adjust a distance between the first conical hopper, the second conical hopper and the pair of calender rolls, and a horizontal linear actuator positioned between the first conical hopper and the second conical hopper.

## Description

This application claims the benefit of priority to U.S. Patent Application No. 18/933,553, entitled "CONE FEEDING ELECTRODE POWDER DISTRIBUTION," filed on October 31, 2024.

### BACKGROUND

### Field

The present disclosure relates generally to a powder dispensing apparatus, particularly a powder dispensing apparatus for dispensing dry electrode powder onto a calender roll.

### Description of the Related Art

Electrode films can be created by calendering a dry electrode powder. The quality of an electrode film is dependent on the distribution of the dry electrode powder onto the calender roll system. The calendering process can consume powder at a specific rate according to yield requirements.

Accordingly, there is a need for a powder dispensing apparatus that dispenses dry electrode powders and enables the creation of high-quality energy storage electrode films.

### SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In some aspects, a powder dispensing system is described. The powder dispensing system comprises a pair of calender rolls, a first conical hopper positioned above the pair of calender rolls, the first conical hopper having a first temperature controlled fluidized section, a second conical hopper positioned above the pair of calender rolls, the second conical hopper having a second temperature controlled fluidized section, a first flow control system in fluidic connection with the first temperature controlled fluidized section, and a second flow control system in fluidic connection with the second temperature controlled fluidized section, a vertical linear actuator configured to adjust a distance between the first conical hopper, the second conical hopper and the pair of calender rolls, and a horizontal linear actuator positioned between the first conical hopper and the second conical hopper.

In some aspects, the powder dispensing system comprises a pair of calender rolls, a first conical hopper positioned above the pair of calender rolls, the first conical hopper having a first temperature controlled fluidized section, and a vertical linear actuator configured to adjust a distance between the first conical hopper and the pair of calender rolls.

In some embodiments, the powder dispensing system further comprises a second conical hopper positioned above the pair of calender rolls, the second conical hopper having a second temperature controlled fluidized section. In some embodiments, the powder dispensing system further comprising a horizontal linear actuator positioned between the first conical hopper and the second conical hopper. In some embodiments, the powder dispensing system further comprising a first flow control system in fluidic connection with the first temperature controlled fluidized section, and a second flow control system in fluidic connection with the second temperature controlled fluidized section. In some embodiments, the powder dispensing system further comprising a powder depth sensor configured to measure a depth of a powder in the first conical hopper. In some embodiments, the powder dispensing system further comprising a flow control system in fluidic connection with the first temperature controlled fluidized section. In some embodiments, the first temperature controlled fluidized section comprises a temperature controlled flow control. In some embodiments, the first temperature controlled fluidized section comprises an air inlet, an air plenum, and a porous internal wall.

In some aspects, a method of powder distribution is described. The method comprising loading a conical hopper with a powder, wherein the conical hopper includes a fluidization section, applying a gas from the fluidization section to form a fluidized powder, dispensing the fluidized powder out of the conical hopper at a dispensing rate onto a calender roll system having a nib positioned below the conical hopper, and forming a piled powder supply on the nib, wherein the piled powder supply is consumed by the calender roll system at a consumption rate, and wherein the dispensing rate and the consumption rate are substantially the same.

In some embodiments, the method further comprises calendering the powder to form a film. In some embodiments, the dispensing rate is greater than 200 kg per hour. In some embodiments, the consumption rate is greater than 200 kg per hour. In some embodiments, the method further comprises adjusting a distance between the conical hopper and the calender roll system via a linear actuator. In some embodiments, applying a gas from the fluidization section to form a fluidized powder comprises applying a constant flow of the gas. In some embodiments, the powder comprises a dry electrode material. In some embodiments, the dry electrode material comprises an anode material. In some embodiments, the dry electrode material comprises a cathode material. In some embodiments, the method further comprises forming a dry electrode film. In some embodiments, the method is a dry fabrication process.

### BRIEF DESCRIPTION OF THE DRAWINGS

FIG. 1A is a perspective view illustration of a powder dispensing apparatus, according to some embodiments.
FIG. 1B is a front view illustration of a powder dispensing apparatus positioned over a calender roll, according to some embodiments.
FIG. 1C is a front cross sectional view illustration of a powder dispensing, according to some embodiments.
FIG. 1D is a side view illustration of a powder dispensing apparatus positioned over a pair of calender rolls, according to some embodiments.
FIG. 2 is a front cross sectional view of a hopper, according to some embodiments.
FIG. 3A is a front view illustration of a powder dispensing apparatus positioned over a calender roll, according to some embodiments.
FIG. 3B is a front view illustration of a powder dispensing apparatus positioned over a calender roll, according to some embodiments.
FIG. 4 is a block diagram illustrating the electronics of a powder dispensing apparatus.
FIG. 5 is a block diagram illustrating a method of powder distribution.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Generally described, one or more aspects of the present disclosure relate to a powder dispensing apparatus including one or more fluidized cones. The powder dispensing apparatus can be positioned above a pair of calender rolls to distribute a powder, such as a dry electrode material onto the calender rolls. The powder dispensing apparatus with conical hoppers advantageously allows for a consistent rate of powder distribution across a calender roll which matches the rate the powder is consumed by the calendering system. The powder dispensing apparatus includes one or more vertical linear actuators which can control the dispensing rate of the powder and one or more fluidization sections which eliminate bridging in the powder. These features allow the dispensing apparatus to distribute dry electrode powder at a consistent rate to match the calendering system consumption rate. Electrode films formed by the powder dispensing apparatus may thereby advantageously improved qualities and form energy storage devices with improved performance. In addition, the lack of or substantial lack of mechanically moving parts during the dispensing process also may improve the robustness of the dispensing apparatus.

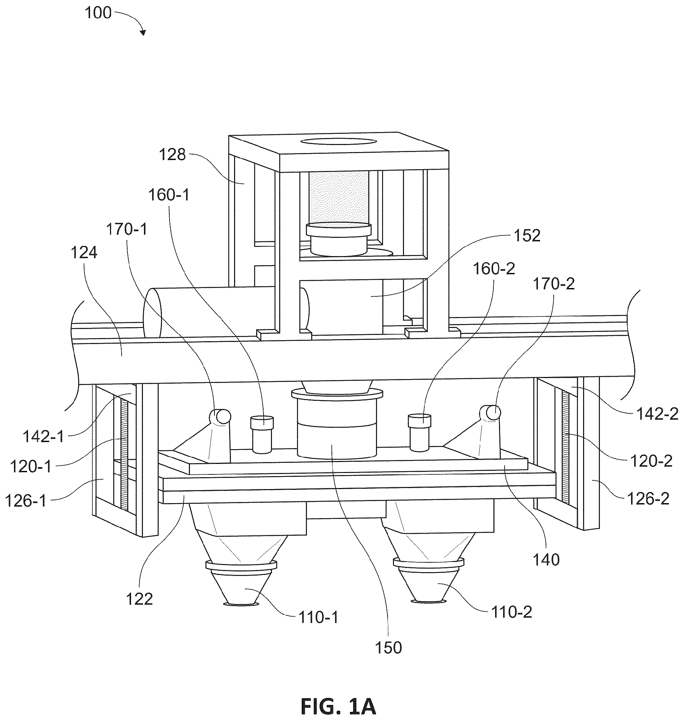

FIG. 1A is a perspective view of a powder dispensing apparatus 100. The powder dispensing apparatus includes first hopper 110-1 and a second hopper 110-2 in some embodiments. A first sensor 160-1 is positioned interior to the first hopper 110-1 and a second sensor 160-2 is positioned interior to the second hopper 110-2. A first dust collection port 170-1 is attached to the first hopper 110-1 and a second dust collection port 170-2 is attached to the second hopper 110-2. A central cone 150 is positioned between the first hopper 110-1 and the second hopper 110-2, which attaches to a feeding module 152. Powder can flow from the feeding module 152 into the central cone 150 which can distribute the powder into the first hopper 110-1 and the second hopper 110-2. The first sensor 160-1 can sense one or more properties of the powder in the first hopper 110-1. The second sensor 160-2 can sense one or more properties of the powder in the second hopper 110-2. The first dust collection portion 170-1 can collect dust from the powder distributed into the first hopper 110-1. The second dust collection portion 170-2 can collect dust from the powder distributed into the second hopper 110-2.

The first hopper 110-1 and the second hopper 110-2 are each attached to a hopper support frame 122 which supports an upper edge of each hopper 110-1 and 110-2. The hopper support frame 122 is movably attached to a first vertical support frame 126-1 and a second vertical support frame 126-2 at each end. A top edge of each vertical support frame 126-1 and 126-2 is attached to a main structural support 124 which supports the powder dispensing apparatus 100. A feeding module support 128 is positioned above the main structural support 124 and holds the feeding module 152 in place.

One or more horizontal linear actuators 140 connects the first hopper 110-1, second hopper 110-2, and the hopper support frame 122. The one or more horizontal linear actuators 140 allow the first hopper 110-1 and the second hopper 110-2 to each move horizontally relative to the hopper support frame 122. The one or more horizontal linear actuators 140 allow the first hopper 110-1 to move horizontally relative to the second hopper 110-2 and the second hopper 110-2 to move horizontally relative to the first hopper 110-1. The hopper support frame 122 is attached to a first vertical linear actuator 120-1 and a second vertical linear actuator 120-2. The first vertical linear actuator 120-1 and second vertical linear actuator 120-2 move the hopper support frame 122 vertically along the vertical support frames 126-1 and 126-2. A pair of depth linear actuators 142-1 and 142-2 connect the first hopper 110-1 and the second hopper 110-2. The pair of depth linear actuators 142-1 and 142-2 allow the first hopper 110-1 and the second hopper 110-2 to each move forward and backwards relative to the main structural support 124.

In some embodiments, the main structural support can be integral to a calender support frame (e.g., the structural support frame of the calender roll apparatus). In some embodiments, the main structural support can be a support that is structurally independent from the calender support frame.

In some embodiments, the apparatus may include a single hopper. In some embodiments, the apparatus may include a plurality of hoppers. For example, 1, 2, 3, 4, 5, 6, or more hoppers, or any range of values therebetween. For each additional hopper, the apparatus can include duplicates of the components described herein to support, actuate, or sense properties of each additional hopper. For example, a third hopper can include any and/or all of the features of the second hopper described herein and the third hopper can move relative to the support frame and/or calender roll system in any of the ways described herein with respect to the second hopper. Additionally, the third hopper can actuate relative to the second hopper in any of the ways described herein that the second hopper can actuate relative to the first hopper. This pattern can be repeated with any number of hoppers included in the apparatus.

In some embodiments, the apparatus includes one or more horizontal linear actuators to actuate the first hopper relative to the second hopper and/or the second hopper relative to the first hopper, thereby adjusting the spacing between the two hoppers. In some embodiments, the one or more horizontal linear actuators can actuate a hopper (e.g., first and/or second hopper) relative to the hopper support frame. In some embodiments, the powder dispensing apparatus does not include a horizontal linear actuator. In some embodiments, the one or more horizontal linear actuators can include 1, 2, 3, or 4 actuators, or any range of values therebetween. In some embodiments, the one or more horizontal linear actuators can be hydraulic actuators, screw driven actuators, pneumatic actuators, and/or piezoelectric actuators.

In some embodiments, the apparatus can include linear guides which align the movement of the vertical linear actuators. In some embodiments, the apparatus can include a single vertical linear actuator which moves the hopper support frame vertically along the first vertical support frame and a following member which supports the hopper support frame along the second vertical support frame. In some embodiments, the vertical linear actuator (e.g. first and/or second vertical linear actuator) can independently move the first hopper. In some embodiments, the vertical linear actuator (e.g. first and/or second vertical linear actuator) can independently move the second hopper. In some embodiments, the first vertical linear actuator can move the hopper support frame vertically and the second vertical linear actuator can move the second hopper relative to the hopper support frame. In some embodiments, the first vertical linear actuator can move the first hopper and the second linear actuator can sync with the first vertical linear actuator to move the second hopper synchronously and/or simultaneously with the first hopper. The one or more vertical linear actuators can be hydraulic actuators, screw driven actuators, pneumatic actuators, and/or piezoelectric actuators.

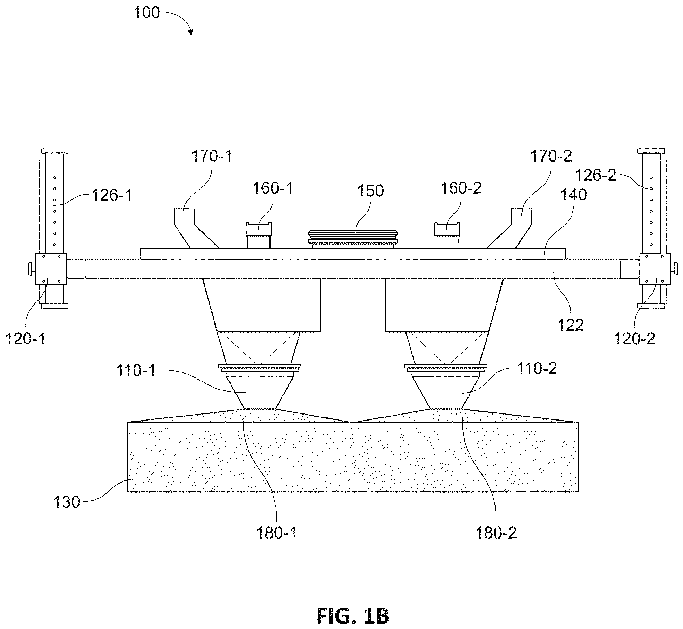

FIG. 1B illustrates a front view of a powder dispensing apparatus 100 positioned over a calender roll 130. In some embodiments, the powder dispensing apparatus includes a first hopper 110-1 and a second hopper 110-2 positioned side-by-side. The first hopper 110-1 and second hopper 110-2 are attached to a hopper support frame 122. A vertical linear actuator 120-1 and 120-2 is located at each end of the hopper support frame. The first vertical linear actuator 120-1 is attached to a first vertical support frame 126-1 and the second vertical linear actuator 120-2 is attached to a second vertical support frame 126-2. The first hopper 110-1 includes a first sensor 160-1 and a first dust collection port 170-1. The second hopper 110-2 includes a second sensor 160-2 and a second dust collection port 170-2. One or more horizontal linear actuators 140 are connected to the first hopper 110-1 and the second hopper 110-2. A first pile of powder 180-1 is dispensed out of the first hopper 110-1 onto the calender roll 130 forming a pile of powder 180-1. A second pile of powder 180-2 is dispensed out of the second hopper 110-2 onto the calender roll 130 forming a pile of powder 180-2.

The vertical linear actuators 120-1 and 120-2 can adjust the height of the first hopper 110-1 and the second hopper 110-2 over the calender roll 130. The height of the first hopper 110-1 over the calender roll 130 can alter the rate at which powder 180-1 is dispensed from the first hopper 110-1. As the first hopper 110-1 is moved upward, away from the calender roll 130, the rate at which powder 180-1 is dispensed increases. The height of the second hopper 110-2 over the calender roll 130 can alter the rate at which powder 180-2 is dispensed from the second hopper 110-2. As the second hopper 110-2 is moved upward, away from the calender roll 130, the rate at which powder 180-2 is dispensed increases.

The one or more horizontal linear actuators 140 can adjust the positions of the first hopper 110-1 and the second hopper 110-2 horizontally relative to each other and relative to the calender roll 130. The location of the first hopper 110-1 and the second hopper 110-2 relative to the calender roll 130 and/or the location of the first hopper 110-1 relative to the second hopper 110-2 can alter the properties and quality of the calendered film created by the calender system.

When the one or more horizontal linear actuators move relative to the hopper support frame, the hoppers are also repositioned relative to the calender roll. In some embodiments, the one or more horizontal linear actuators can adjust the position of the first hopper so that the first hopper can be positioned over anywhere from a first end of the calender roll to over the midpoint of the calender roll. In some embodiments, the one or more horizontal linear actuators can adjust the position of the second hopper so that the second hopper can be positioned anywhere from over a second end of the calender roll to over the midpoint.

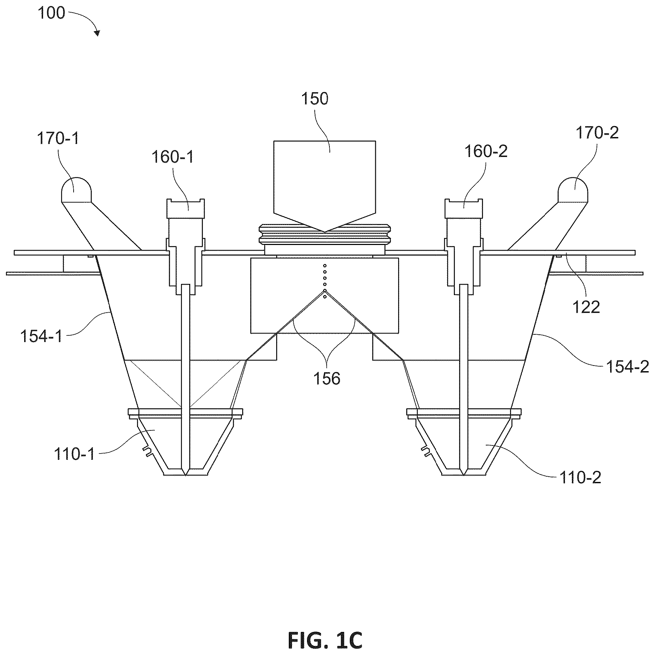

FIG. 1C illustrates a front cross section view of a powder dispensing apparatus 100. In some embodiments, the powder dispensing apparatus 100 includes a central cone 150 positioned over a first hopper 110-1 and a second hopper 110-2. A powder diverter 156 is positioned between the central cone 150 and the first hopper 110-1 and the second hopper 110-2. The powder diverter 156 positioned below the central cone 150 at the midpoint of the central cone 150 so that powder passing through the central cone 150 will be diverted evenly between the first hopper 110-1 and the second hopper 110-2 by the powder diverter 156. The first hopper 110-1 is connected to a hopper support frame 122 by a first side wall 154-1 and the second hopper 110-2 is connected to the hopper support frame 122 by a second side wall 154-2.

A first sensor 160-1 is positioned within the first hopper 110-1 and extends to an outlet of the first hopper 110-1. A dust collection port 170-1 is positioned at a top of the first hopper 110-1. A second sensor 160-2 is positioned within the second hopper 110-2 and extends to an outlet of the second hopper 110-2. A dust collection port 170-2 is positioned at a top of the second hopper 110-2.

In some embodiments, the powder diverter can include an adjustable portion which can be manually or automatically controlled with linear actuators to adjust the rate of powder feed into each hopper.

In some embodiments a dust collection port can collect loose powder dust from a hopper. In some embodiments, a sensor (e.g., first and/or second sensor) can sense the depth and/or temperature of powder in the in a hopper, powder positioned on the calender roll below the first hopper (e.g., the powder dispensed out of the first hopper and onto the calender roll), and/or powder over an area of the calender roll. In some embodiments, the position of the sensor is fixed relative to the hopper such that the sensor moves with the hopper when the hopper is actuated by any of the linear actuators described herein. In some embodiments, the sensor is fixed to the main structural support so that the sensor does not move when the hopper moves and the position of the sensor relative to the calender roll is fixed. In some embodiments, the apparatus can include a plurality of sensors for each hopper any of which can sense depth and/or temperature. In some embodiments, the sensor can be temperature sensors, depth sensors, pressure sensors, and/or flow measurement sensors.

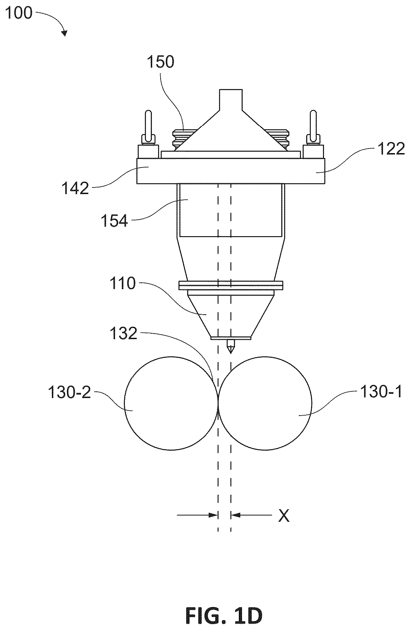

FIG. 1D illustrates a side view of a powder dispensing apparatus 100 positioned over a pair of calender rolls 130-1 and 130-2. In some embodiments, the powder dispensing apparatus 100 includes a central cone 150 positioned over a hopper 110 attached to a hopper support frame 122 by a side wall 154. The powder dispensing apparatus also includes a depth linear actuator 142. As illustrated, there is a nib 132 between the pair of calender rolls 130-1 and 130-2 where the calender rolls 130-1 and 130-2 contact, or nearly contact each other. The depth linear actuator 142 can adjust the position of the hopper 110 relative to the nib 132. As illustrated, the hopper 110 is positioned closer to the calender roll 130-1 offset a distance X from the nib 132. The distance X can be adjusted by the depth linear actuator 142.

In some embodiments, the depth linear actuator can move the hopper from being positioned directly over the nib of the pair of calender rolls to positioned over the midpoint of either of the calender rolls. In some embodiments, the distance X can be, be about, be at least, or be at least about, 0mm, 10mm, 20mm 30mm, 40mm, 50mm, 60mm, 70mm, 80mm, 90mm ,100mm, 110mm, 120mm, 130mm, 140mm, 150mm, 160mm, 170mm, 180mm, 190mm, 200mm, 210mm, 220mm, 230mm, 240mm, 250mm, 260mm, 270mm, 280mm, 290mm, 300mm, 310mm, 320mm, 330mm, 340mm, 350mm, 360mm, 370mm, 380mm, 390mm, 400mm, 410mm, 420mm, 430mm, 440mm, 450mm, 460mm, 470mm, 480mm, 490mm, 500mm, 550mm or 600mm, or any range of values therebetween. In some embodiments, the powder dispensing apparatus does not include a depth linear actuator. In some embodiments, the one or more depth linear actuators can include 1, 2, 3, or 4 actuators, or any range of values therebetween. In some embodiments, the one or more depth linear actuators can be hydraulic actuators, screw driven actuators, pneumatic actuators, and/or piezoelectric actuators.

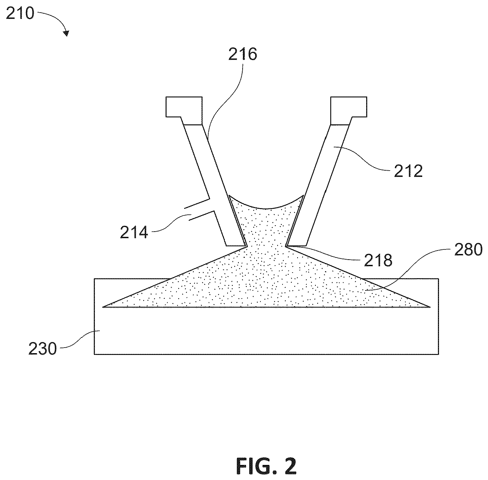

FIG. 2 illustrates a front section view of a hopper 210 positioned over a calender roll 230. The hopper 210 is conical (e.g., cone shaped) in some embodiments and includes an internal wall 216, an air plenum 212, an outlet 218, and a gas inlet 214. The internal wall 216 includes a fluidization section (e.g., porous mesh section) and forms the internal surface of the cone shape of the hopper 210. The air plenum 212 is a hollow portion of the hopper 210. The gas inlet 214 is fluidically connected to the air plenum 212. A first flow control system (e.g., a gas source) can supply temperature-controlled gas (e.g., temperature-controlled air, oxygen, or nitrogen) to the gas inlet 214 which can pressurize the air plenum 212. The pressurized air plenum 212 can be fluidically connected to the porous mesh section of the internal wall 216 causing some or all of the internal wall 216 to be fluidized.

As illustrated, the hopper 210 holds a powder 280 and dispenses the powder 280 onto the calender roll 230. When the internal wall 216 is not fluidized, the friction between the powder 280 and the internal wall 216 can cause the powder 280 to bridge across the outlet 218 and causing the flow of powder 280 to stop, or flow inconsistently. When the internal wall 216 is fluidized, the friction between the powder 280 and the internal wall 216 is reduced eliminating or reducing the bridging of the powder 280 across the outlet 218 and causing the flow of powder 280 to flow consistently.

In some embodiments, the fluidization section can cover the majority of the internal surface area of the conical hopper. In some embodiments, the fluidization section can cover a portion of the inside of the conical hopper. In some embodiments, the hopper can be constantly fluidized with a flow of gas through the fluidization section of the internal wall. In some embodiments, the hopper can be intermittently fluidized with a flow of gas turns on and off. In some embodiments, the rate at which gas flows through the fluidization section can be adjusted. In some embodiments, the fluidization of the hopper can control the rate at which powder flows out of the hopper, and the position of the hopper relative to the calender roll can alternatively or in addition control the rate at which powder flows out of the hopper. The rate at which powder flows out of the hopper, in conjunction with the rate at which powder is introduced to the hopper controls the level of powder within the hopper. In some embodiments, the rate at which powder flows out of the hopper can be passively controlled by setting a fluidization rate and fixing the position of the hopper relative to the calender roll. In some embodiments, the rate at which powder flows out of the hopper can be actively controlled by adjusting the fluidization rate and/or adjusting to position of the hopper relative to the calender roll.

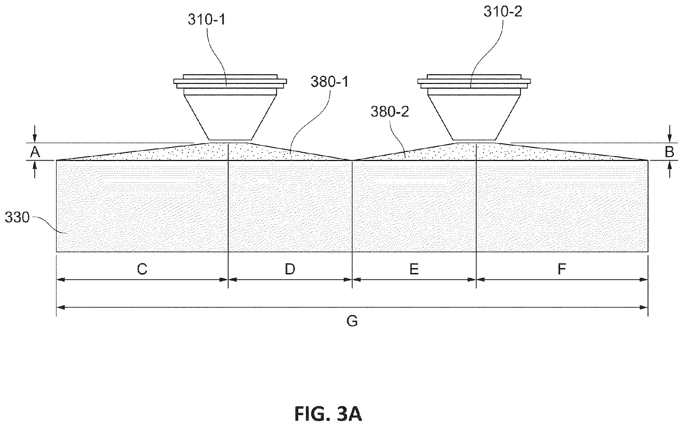

FIG. 3A illustrates a front view of a pair of hoppers 310-1 and 310-2 positioned over a calender roll 330 in some embodiments. The first hopper 310-1 is illustrated dispensing a first pile of powder 380-1 and the second hopper 310-2 is illustrated dispensing a second pile of powder 380-2. The first hopper 310-1 is positioned a distance A above the calender roll 330 and the second hopper 310-2 is positioned a distance B above the calender roll 330. The first pile of powder 380-1 extends a distance C from the center of the first hopper 310-1 to the edge of the pile of powder 380-1 closest to the end of the calender roll 330. The first pile of powder 380-1 extends a distance D from the center of the first hopper 310-1 towards approximately the middle of the calender roll 330. The second pile of powder 380-2 extends a distance F from the center of the second hopper 310-2 to the edge of the pile of powder 380-2 closest to the end of the calender roll 330. The second pile of powder 380-2 extends a distance E from the center of the second hopper 310-2 towards approximately the middle of the calender roll 330. The piles of powder 380-1 and 380-2 extend a length G across the length of the calender roll 330.

In some embodiments the distance A can be, be about, be at least, or be at least about, 0mm, 10mm, 20mm, 30mm, 40mm, 50mm, 60mm, 70mm, 80mm, 90mm, 100mm, 110mm, 120mm, 130mm, 140mm, 150mm, 160mm, 170mm, 180mm, 190mm, 200mm, 210mm, 220mm, 230mm, 240mm, 250mm, 260mm, 270mm, 280mm, 290mm, 300mm, 310mm, 320mm, 330mm, 340mm, 350mm, 360mm, 370mm, 380mm, 390mm, 400mm, or any range of values therebetween. In some embodiments the distance B can be, be about, be at least, or be at least about, 0mm, 10mm, 20mm, 30mm, 40mm, 50mm, 60mm, 70mm, 80mm, 90mm, 100mm, 110mm, 120mm, 130mm, 140mm, 150mm, 160mm, 170mm, 180mm, 190mm, 200mm, 210mm, 220mm, 230mm, 240mm, 250mm, 260mm, 270mm, 280mm, 290mm, 300mm, 310mm, 320mm, 330mm, 340mm, 350mm, 360mm, 370mm, 380mm, 390mm, 400mm, or any range of values therebetween. In some embodiments, the distance A is the same as the distance B. In some embodiments, the distance A is different from the distance B. In some embodiments, the distance C can be, be about, be at least, or at be least about, 100mm, 120mm, 140mm, 160mm, 180mm, 200mm, 220mm, 240mm, 260mm, 280mm, 300mm, 320mm, 340mm, 360mm, 380mm, 400mm, 420mm, 440mm, 460mm, 480mm, 500mm, 520mm, 540mm, 560mm, 580mm, 600mm, 620mm, 640mm, 660mm, 680mm, 700mm, 720mm, 740mm, 760mm, 780mm, 800mm, 820mm, 840mm, 860mm, 880mm, 900mm, 920mm, 940mm, 960mm, 980mm, 1000mm, 1020mm, 1040mm, 1060mm, 1080mm, 1100mm, 1120mm, 1140mm, 1160mm, 1180mm, 1200mm, 1220mm, 1240mm, 1260mm, 1280mm, 1300mm, 1320mm, 1340mm, 1360mm, 1380mm, 1400mm, 1420mm, 1440mm, 1460mm, 1480mm, 1500mm, 1520mm, 1540mm, 1560mm, 1580mm, 1600mm, 1620mm, 1640mm, 1660mm, 1680mm, 1700mm, 1720mm, 1740mm, 1760mm, 1780mm, 1800mm, 1820mm, 1840mm, 1860mm, 1880mm, 1900mm, 1920mm, 1940mm, 1960mm, 1980mm, 2000mm, or any range of values therebetween. In some embodiments, the distance F can be, be about, be at least, or be at least about, 100mm, 120mm, 140mm, 160mm, 180mm, 200mm, 220mm, 240mm, 260mm, 280mm, 300mm, 320mm, 340mm, 360mm, 380mm, 400mm, 420mm, 440mm, 460mm, 480mm, 500mm, 520mm, 540mm, 560mm, 580mm, 600mm, 620mm, 640mm, 660mm, 680mm, 700mm, 720mm, 740mm, 760mm, 780mm, 800mm, 820mm, 840mm, 860mm, 880mm, 900mm, 920mm, 940mm, 960mm, 980mm, 1000mm, 1020mm, 1040mm, 1060mm, 1080mm, 1100mm, 1120mm, 1140mm, 1160mm, 1180mm, 1200mm, 1220mm, 1240mm, 1260mm, 1280mm, 1300mm, 1320mm, 1340mm, 1360mm, 1380mm, 1400mm, 1420mm, 1440mm, 1460mm, 1480mm, 1500mm, 1520mm, 1540mm, 1560mm, 1580mm, 1600mm, 1620mm, 1640mm, 1660mm, 1680mm, 1700mm, 1720mm, 1740mm, 1760mm, 1780mm, 1800mm, 1820mm, 1840mm, 1860mm, 1880mm, 1900mm, 1920mm, 1940mm, 1960mm, 1980mm, 2000mm, or any range of values therebetween. In some embodiments, the distance D is the same as the distance F. In some embodiments, the distance C is different from the distance F. In some embodiments, the distance D can be, be about, be at least, or at be least about, 100mm, 120mm, 140mm, 160mm, 180mm, 200mm, 220mm, 240mm, 260mm, 280mm, 300mm, 320mm, 340mm, 360mm, 380mm, 400mm, 420mm, 440mm, 460mm, 480mm, 500mm, 520mm, 540mm, 560mm, 580mm, 600mm, 620mm, 640mm, 660mm, 680mm, 700mm, 720mm, 740mm, 760mm, 780mm, 800mm, 820mm, 840mm, 860mm, 880mm, 900mm, 920mm, 940mm, 960mm, 980mm, 1000mm, 1020mm, 1040mm, 1060mm, 1080mm, 1100mm, 1120mm, 1140mm, 1160mm, 1180mm, 1200mm, 1220mm, 1240mm, 1260mm, 1280mm, 1300mm, 1320mm, 1340mm, 1360mm, 1380mm, 1400mm, 1420mm, 1440mm, 1460mm, 1480mm, 1500mm, 1520mm, 1540mm, 1560mm, 1580mm, 1600mm, 1620mm, 1640mm, 1660mm, 1680mm, 1700mm, 1720mm, 1740mm, 1760mm, 1780mm, 1800mm, 1820mm, 1840mm, 1860mm, 1880mm, 1900mm, 1920mm, 1940mm, 1960mm, 1980mm, 2000mm, or any range of values therebetween. In some embodiments, the distance E can be, be about, be at least, or be at least about, 100mm, 120mm, 140mm, 160mm, 180mm, 200mm, 220mm, 240mm, 260mm, 280mm, 300mm, 320mm, 340mm, 360mm, 380mm, 400mm, 420mm, 440mm, 460mm, 480mm, 500mm, 520mm, 540mm, 560mm, 580mm, 600mm, 620mm, 640mm, 660mm, 680mm, 700mm, 720mm, 740mm, 760mm, 780mm, 800mm, 820mm, 840mm, 860mm, 880mm, 900mm, 920mm, 940mm, 960mm, 980mm, 1000mm, 1020mm, 1040mm, 1060mm, 1080mm, 1100mm, 1120mm, 1140mm, 1160mm, 1180mm, 1200mm, 1220mm, 1240mm, 1260mm, 1280mm, 1300mm, 1320mm, 1340mm, 1360mm, 1380mm, 1400mm, 1420mm, 1440mm, 1460mm, 1480mm, 1500mm, 1520mm, 1540mm, 1560mm, 1580mm, 1600mm, 1620mm, 1640mm, 1660mm, 1680mm, 1700mm, 1720mm, 1740mm, 1760mm, 1780mm, 1800mm, 1820mm, 1840mm, 1860mm, 1880mm, 1900mm, 1920mm, 1940mm, 1960mm, 1980mm, 2000m, or any range of values therebetween. In some embodiments, the distance D is the same as the distance E. In some embodiments, the distance D is different from the distance E. In some embodiments, any and/or all of distances C, D, E, and F can be the same.

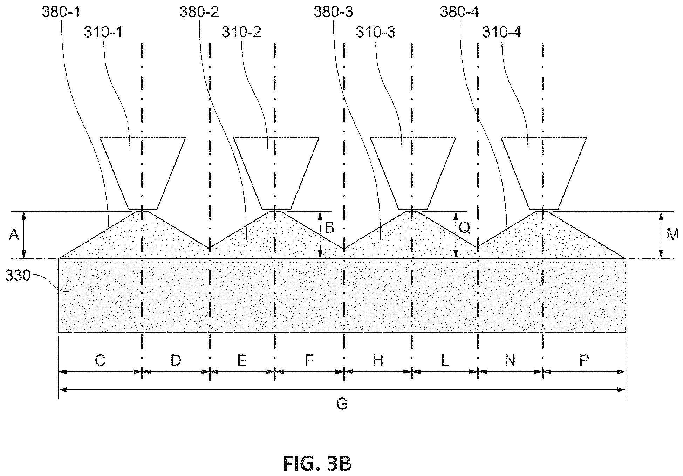

FIG. 3B illustrates a front view of a series of hoppers 310-1, 310-2, 310-3, and 310-4 positioned over a calender roll 330 in some embodiments. While four hoppers are illustrated it should be understood that any number of hoppers is possible. For example, 1, 2, 3, 4, 5, 6, 7, 8, 9, or 10 hoppers, or any range of values therebetween. The first hopper 310-1 is illustrated dispensing a first pile of powder 380-1 and the second hopper 310-2 is illustrated dispensing a second pile of powder 380-2. The third hopper 310-3 is illustrated dispensing a third pile of powder 380-3 and the fourth hopper 310-4 is illustrated dispensing a fourth pile of powder 380-4. The first hopper 310-1 is positioned a distance A above the calender roll 330, the second hopper 310-2 is positioned a distance B above the calender roll 330, and the third hopper 310-3 is positioned a distance Q above the calender roll 330. The fourth hopper 310-4 can be positioned a distance M above the calender roll 330. The first pile of powder 380-1 extends a distance C from the center of the first hopper 310-1 to the edge of the pile of powder 380-1 closest to the end of the calender roll 330. The first pile of powder 380-1 extends a distance D from the center of the first hopper 310-1 towards the edge of the second pile of powder 380-2. The second pile of powder 380-2 extends a distance F from the center of the second hopper 310-2 to the edge of the pile of powder 380-3. The second pile of powder 380-2 extends a distance E from the center of the second hopper 310-2 towards the first pile of powder 380-3. The third pile of powder 380-3 extends a distance L from the center of the third hopper 310-3 to the edge of the fourth pile of powder 380-4. The third pile of powder 380-3 extends a distance H from the center of the third hopper 310-3 towards the second pile of powder 380-2. The fourth pile of powder 380-4 extends a distance N towards the third pile of powder 380-3 and a distance P towards the end of the calender roll 330. The piles of powder 380-1, 380-2, 380-3 and 380-4 extend a length G across the length of the calender roll 330.

Distance A can be any of the values described above with reference to FIG. 3A. Distance B can be any of the values described above with reference to FIG. 3A. Distances Q and m can be any of the values described above with reference to distances A or B in FIG. 3A. Distance C can be any of the values described above with reference to FIG. 3A. Distance D can be any of the values described above with reference to FIG. 3A. Distance E can be any of the values described above with reference to FIG. 3A. Distance F can be any of the values described above with reference to FIG. 3A. Distances H, L, N, and P can be any of the values described above with reference to distances C, D, E, or F with reference to FIG. 3A. Distance G can be any of the values described above with reference to FIG. 3A.

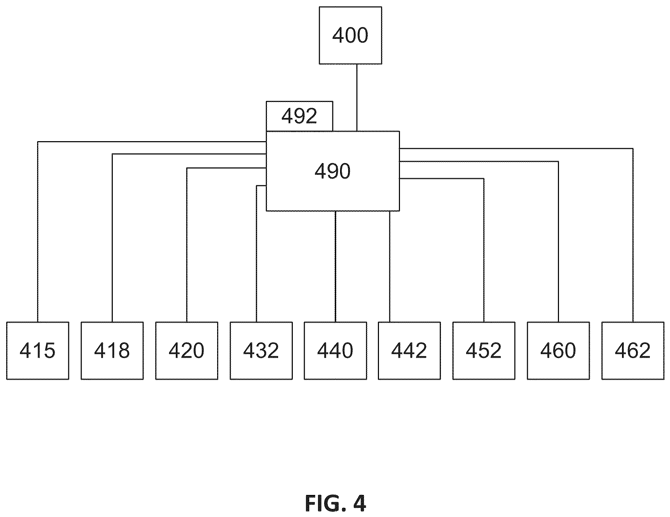

FIG. 4 shows a block diagram illustrating the electronics and controls of a powder dispensing apparatus 400. The electronic system can apply to any example described herein. A processor 490 (e.g., one or more processors, controller, central processing unit, or CPU) communicates with a memory 492. The processor 490 can comprise one or more integrated circuits. The processor 490 can comprise and/or be embodied as one or more chips, controllers such as microcontrollers (MCUs), and/or microprocessors (MPUs). The processor 490 can comprise a central processing unit (CPU). In some implementations, the processor 490 can be embodied as a system-on-a-chip (SoC). The processor 490 can be configured to implement an operating system which can allow multiple processes to execute simultaneously.

The processor 490 can communicate with one or more temperature controls 415, one or more flow controls 418, one or more vertical linear actuators 420, a calender system control 432, one or more horizontal linear actuators 440, one or more depth linear actuators 442, a powder control 452, one or more depth sensors 460, and one or more temperature sensors 462.

The memory 492 can store information sensed by one or more depth sensors 460 and/or the one or more temperature sensors 462. The memory 492 can store system use information from the powder control 452, one or more depth linear actuators 442, one or more horizontal linear actuators 440, calender system control 432, one or more vertical linear actuators 420, the one or more flow controls 418, and the one or more temperature controls 415.

The one or more temperature controls 415 regulates the temperature of gas from a gas source which is input into the fluidized hoppers. The one or more flow controls 418 controls the rate at which gas from the gas source is input into the fluidized hoppers. The one or more vertical linear actuators 420 regulate the height of the fluidized hoppers. The calender system control 432 regulate the controls of the calender system such as the rate at which the calender system rolls consume powder. The one or more horizontal linear actuators 440 regulate the horizontal positions of the fluidized hoppers. The one or more depth linear actuators 442 regulate the depth position of the fluidized hoppers relative to the calender rollers. The powder control 452 regulates the rate at which powder is dispensed into the fluidized hoppers. The one or more depth sensors 460 sense (e.g., measure) the depth of powder in the fluidized hoppers and/or the depth of the powder dispensed onto the calender rolls. The one or more temperature sensors 462 sense (e.g., measure) the temperature of the powder in the fluidized hopper and/or the temperature of the powder dispensed onto the calender rolls.

The processor 490 can regulate the function of the one or more temperature controls 415, one or more flow controls 418, one or more vertical linear actuators 420, the calender system control 432, one or more horizontal linear actuators 440, one or more depth linear actuators 442, or the powder control 452 based on either user input or information communicated to the processor from the temperature controls 415, one or more flow controls 418, one or more vertical linear actuators 420, the calender system control 432, one or more horizontal linear actuators 440, one or more depth linear actuators 442, the powder control 452, one or more depth sensors 460, and one or more temperature sensors 462.

In some embodiments, the sensors can also include pressure sensors and/or flow measurement sensors.

In some embodiments, when the rate at which the calender roll system consumes powder is increased, the processor can adjust the one or more vertical actuators to raise the hoppers relative to the calender rolls. In some embodiments, when the temperature sensed by the one or more temperature sensors exceeds a predetermined range, the processor can adjust the one or more temperature controls to cool the temperature of the gas input into the hoppers. In some embodiments, when the depth sensor senses that the depth of the powder in the hopper is below a predetermined range, the processor can adjust the powder control to distribute more powder into the hopper. In some embodiments, the powder dispensing apparatus includes some or all of the controls described herein.

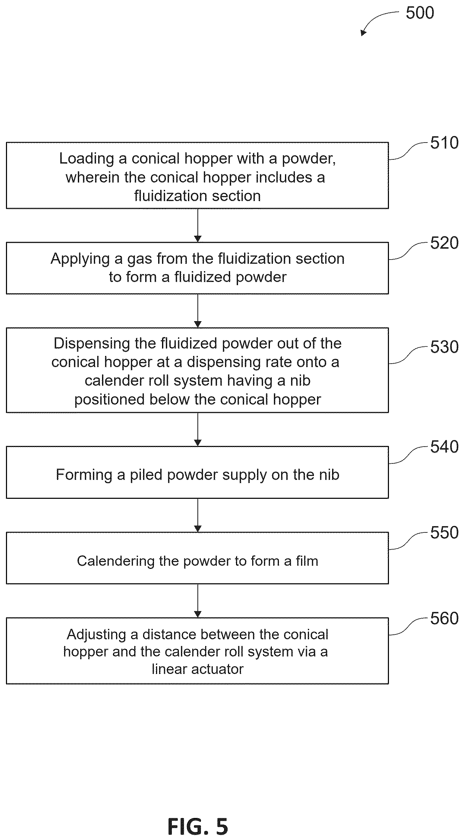

FIG. 5 illustrates a method 500 of powder distribution. The method 500 can be applied to the systems described herein. The method 500 can include any of the steps described herein in any order or exclude any of the steps described herein. At step 510 the method 500 includes loading a conical hopper with a powder, wherein the conical hopper includes a fluidization section. At step 520 the method 500 includes applying a gas from the fluidization section to form a fluidized powder. At step 530 the method 500 includes dispensing the fluidized powder out of the conical hopper at a dispensing rate onto a calender roll system having a nib positioned below the conical hopper. At step 540 the method includes forming a piled powder supply on the nib. At step 550 the method includes calendering the powder to form a film. At step 560 the method 500 includes adjusting a distance between the conical hopper than the calender roll system via a linear actuator. In some embodiments, the piled powder supply is consumed by the calender roll system at a consumption rate, and the dispensing rate and the consumption rate are substantially the same. In some embodiments, the dispensing rate is, is about, is at least, or is at least about, 100 kg/hour, 150 kg/hour, 200 kg/hour, 250 kg/hour, 300 kg/hour, 400 kg/hour, 500 kg/hour, 600 kg/hour, 700 kg/hour, 800 kg/hour, 900 kg/hour, 1000 kg/hour, 1250 kg/hour, 1500 kg/hour, 1750 kg/hour, 2000 kg/hour, 2250 kg/hour, 2500 kg/hour, 2750 kg/hour, 3000 kg/hour, 3250 kg/hour, 3500 kg/hour, 4000 kg/hour, 5000 kg/hour, or any range of values therebetween. In some embodiments, the consumption rate is, is about, is at least, or is at least about, 100 kg/hour, 150 kg/hour, 200 kg/hour, 250 kg/hour, 300 kg/hour, 400 kg/hour, 500 kg/hour, 600 kg/hour, 700 kg/hour, 800 kg/hour, 900 kg/hour, 1000 kg/hour, 1250 kg/hour, 1500 kg/hour, 1750 kg/hour, 2000 kg/hour, 2250 kg/hour, 2500 kg/hour, 2750 kg/hour, 3000 kg/hour, 3250 kg/hour, 3500 kg/hour, 4000 kg/hour, 5000 kg/hour, or any range of values therebetween. In some embodiments, the dispensing rate is greater than, is less than, or is or is about equal to the consumption rate. In some embodiments, the gas from the fluidization section to form a fluidized powder can be applied at a constant flow of the gas. In some embodiments, the powder can be a dry electrode material. In some embodiments, the dry electrode material can include an anode material and/or a cathode material. In some embodiments, the method can be a dry fabrication process.

### Electrode Materials, Electrode Films, Electrodes and Energy Storage Devices

An active material (e.g., cathode active material, anode active material) may be used in the preparation of an electrode film and/or electrode for an energy storage device. In some embodiments, an electrode comprises a current collector (i.e., a foil layer) and an electrode film (i.e., coated lane).

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., LiFePO₄ or "LFP"), lithium manganese iron phosphate (e.g., LiMn_{0.6}Fe_{0.4}PO₄ or "LMFP"), lithium nickel manganese cobalt oxide (i.e., LiNiₓMn_{y}Co_{1-x-y}O₂ or "NMC"), lithium nickel cobalt aluminum oxide (i.e., LiNiₓCo_{y}Al_{z}O₂ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include LiFePO₄ (i.e., "lithium iron phosphate" and "LFP") and LiMn₁₋ₓFeₓPO₄ (i.e., "lithium manganese iron phosphate" and "LMFP") (e.g., LiMn_{0.6}Fe_{0.4}PO₄ or LiMn_{0.8}Fe_{0.2}PO₄). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector (e.g., a coated lane is disposed on a foil layer) to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 µm, 100 µm, 50 µm, 40 µm, 30 µm, 20 µm, 15 µm, 10 µm, 5 µm, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, an energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate (LiPF₆), lithium bis(trifluoromethanesulfonyl)imide (LiFSI), lithium tetrafluoroborate (LiBF₄), lithium perchlorate (LiClO₄), lithium bis(trifluoromethansulfonyl)imide (LiN(SO₂CF₃)₂), lithium trifluoromethansulfonate (LiSO₃CF₃), lithium bis(oxalato)borate (LiB(C₂O₄)₂), lithium bis(fluorosulfonyl)imide (LiN(SO₂F)₂, lithium difluoro(oxalato)borate (LiC₂BF₂O₄) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

For expository purposes, the term "horizontal" as used herein is defined as a plane parallel to the plane or surface of the floor of the area in which the device being described is used or the method being described is performed, regardless of its orientation. The term "floor" can be interchanged with the term "ground." The term "vertical" refers to a direction perpendicular to the horizontal as just defined. Terms such as "above," "below," "bottom," "top," "side," "front," "rear," "lateral," "higher," "lower," "upper," "over," and "under," are defined with respect to the horizontal plane, in use.

The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Although certain embodiments and examples have been described herein, it will be understood by those skilled in the art that many aspects of the delivery systems shown and described in the present disclosure may be differently combined and/or modified to form still further embodiments or acceptable examples. All such modifications and variations are intended to be included herein within the scope of this disclosure. A wide variety of designs and approaches are possible. No feature, structure, or step disclosed herein is essential or indispensable.

For purposes of this disclosure, certain aspects, advantages, and novel features are described herein. It is to be understood that not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Moreover, while illustrative embodiments have been described herein, the scope of any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to the examples described in the present specification or during the prosecution of the application, which examples are to be construed as non-exclusive. Further, the actions of the disclosed processes and methods may be modified in any manner, including by reordering actions and/or inserting additional actions and/or deleting actions. It is intended, therefore, that the specification and examples be considered as illustrative only, with a true scope and spirit being indicated by the claims and their full scope of equivalents.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

The ranges disclosed herein also encompass any and all overlap, sub-ranges, and combinations thereof. Language such as "up to," "at least," "greater than," "less than," "between," and the like includes the number recited.

## Claims

1. A powder dispensing system, comprising:
a pair of calender rolls;
a first conical hopper positioned above the pair of calender rolls, the first conical hopper having a first temperature controlled fluidized section; and
a vertical linear actuator configured to adjust a distance between the first conical hopper and the pair of calender rolls.

2. The powder dispensing system of claim 1, further comprising: a second conical hopper positioned above the pair of calender rolls, the second conical hopper having a second temperature controlled fluidized section, preferably further comprising a horizontal linear actuator positioned between the first conical hopper and the second conical hopper.

3. The powder dispensing system of claim 2, further comprising a first flow control system in fluidic connection with the first temperature controlled fluidized section, and a second flow control system in fluidic connection with the second temperature controlled fluidized section.

4. The powder dispensing system of any one of claims 1-3, further comprising a powder depth sensor configured to measure a depth of a powder in the first conical hopper.

5. The powder dispensing system of any one of claims 1-4, further comprising a flow control system in fluidic connection with the first temperature controlled fluidized section.

6. The powder dispensing system of any one of claims 1-5, wherein the first temperature controlled fluidized section comprises a temperature controlled flow control.

7. The powder dispensing system of any one of claims 1-6, wherein the first temperature controlled fluidized section comprises an air inlet, an air plenum, and a porous internal wall.

8. A method of powder distribution, the method comprising:
loading a conical hopper with a powder, wherein the conical hopper includes a fluidization section;
applying a gas from the fluidization section to form a fluidized powder;
dispensing the fluidized powder out of the conical hopper at a dispensing rate onto a calender roll system having a nib positioned below the conical hopper; and
forming a piled powder supply on the nib;
wherein the piled powder supply is consumed by the calender roll system at a consumption rate; and
wherein the dispensing rate and the consumption rate are substantially the same.

9. The method of claim 8, further comprising calendering the powder to form a film.

10. The method of claim 8 or 9, wherein the dispensing rate is at least about 200 kg/hour and/or wherein the consumption rate is at least about 200 kg/hour.

11. The method of any one of claims 8-10, further comprising adjusting a distance between the conical hopper and the calender roll system via a linear actuator.

12. The method of any one of claims 8-11, wherein applying a gas from the fluidization section to form a fluidized powder comprises applying a constant flow of the gas.

13. The method of any one of claims 8-12, wherein the powder comprises a dry electrode material, preferably wherein the dry electrode material comprises an anode material and/or a cathode material.

14. The method of any one of claims 8-13, further comprising forming a dry electrode film.

15. The method of any one of claims 8-14, wherein the method is a dry fabrication process.
